# EUROPEAN PATENT SPECIFICATION

(11) **EP 2 855 115 B1**
(45) Date of publication and mention of the grant of the patent: **18.05.2016**
(21) Application number: 13734344.8
(22) Date of filing: 22.05.2013
(51) Int. Cl.: B29C 63/42, B65C 3/06, B65C 3/16

(54) **A SYSTEM TO FIX FILM SLEEVES**
SYSTEM ZUM ANBRINGEN VON FILMETIKETTEN
SYSTÈME POUR APPLIQUER DES ÉTIQUETTE DE FILM

(30) Priority: 25.05.2012 TR 201206159
(43) Date of publication of application: 08.04.2015
(73) Proprietor: Aygaz Anonim Sirketi, 34394 Istanbul (TR)
(72) Inventor: ERDEMIRCI, Esref Selcuk, Istanbul (TR); PEKCAN, Sedat, 21120 Diyarbakir (TR); KAYA, Hilmet, 21090 Diyarbakir (TR); GUMUSTAS, Erdal, 21090 Diyarbakir (TR)
(74) Representative: Cayli, Hülya
(86) International application number: PCT/EP2013/060511
(87) International publication number: WO 2013/174868

(56) References cited:
- EP-A1- 0 952 084
- EP-A1- 2 374 603
- WO-A1-02/49922
- WO-A1-2004/067385
- DE-A1-102010 015 918
- DE-B3-102004 041 949
- US-A- 3 523 052

## Description

### Field of Invention

The present invention relates to a system developed for the fixation of a film label to the body of an industrial or household gas cylinder.

### Prior Art

Film labels indicating e.g. the producer of a gas cylinder can be provided on the body of industrial gas cylinders and/or household gas cylinders (e.g. 12 kg kitchen cylinders or 2 kg camping cylinders). These films (or film labels) can be fixed to the cylinder body in different manners. One of the methods according to the prior art is adhering a film label to the cylinder body, e.g. as disclosed in the utility model document CN201382259Y. In adhesion-based methods, however, some difficulties are encountered such as the length of time required for the adhesive to dry, removing a previous film label to adhere a new one when an emptied cylinder is to be refilled, etc.. In order to avoid these difficulties, some films are used which are affixed to a cylinder in a surrounding or encircling manner and are then shrunk by heat application. However, these films are shrunk manually under heat application and therefore lengthen the process time. A film fixation system according to the preamble of claim 1 is disclosed in US 3 523 052.

### Brief Description of Invention

A film fixation system for fixing a heat-shrinking film onto a cylinder according to the present invention and according to claim 1 comprises at least one conveyor band suitable to place at least one cylinder thereon to move the cylinder along a line; at least one aligning device to align the film worn around the periphery of the cylinder on the conveyor band with respect to the cylinder; and at least one heating unit suitable for heat-shrinking the film aligned with respect to the cylinder by means of the aligning device to provide the fixation of the film on the cylinder.

The film fixation process is conducted in a rapid manner in the film fixation system according to the present invention by virtue of moving the cylinders on the conveyor band. Additionally, the fixation process is performed in a reliable and practical manner using the aligner device and the heating unit.

### Object of Invention

The object of the present invention is to develop a film fixation system for fixing a film label to a cylinder.

Another object of the present invention is to develop a film fixation system for fixing a heat-shrinking film label to a cylinder.

A further object of the present invention is to develop a film fixation system in which a film label to be fixed to a cylinder is heated in an automatic manner.

Still a further object of the present invention is to develop a reliable, rapid-running and practical film fixation system.

### Description of Figures

Illustrative embodiments of a film fixation system according to the present invention are illustrated in the accompanying figures briefly described hereunder.
Figure 1 is a perspective illustration of a film fixation system according to the present invention.
Figure 2 is a perspective illustration of an aligning device comprised by the film fixation system according to the present invention.
Figure 3 is a perspective illustration of the aligning device of the film fixation system according to the present invention as viewed from another angle.
Figure 4 is a front illustration of a heating unit comprised by the film fixation system according to the present invention.
Figure 5 is a front illustration of the heating unit comprised by the film fixation system according to the present invention as viewed from another angle.

The components in said figures are individually referenced as following.

| | |
|---|---|
| Cylinder | (1) |
| Film | (2) |
| Conveyor band | (3) |
| Aligning device | (4) |
| Body | (4a, 5a) |
| Moving member | (4b, 5b) |
| Holder member | (4c) |
| Heating unit | (5) |
| Heating cap | (5c) |

### Description of Invention

Film labels provided with various information (e.g. producer data, instructions on use and safety, cylinder content, etc.) are used on industrial and/or household type gas cylinders. These films (or film labels) can be made so as to be fixed to a cylinder in a manner surrounding or encircling the same. A system is developed according to the present invention for fixing a film of this type to the periphery of a gas cylinder.

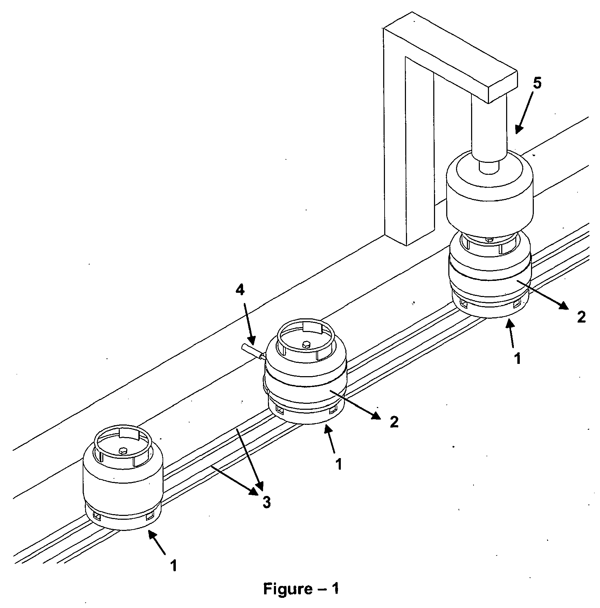

As illustrated in Figure 1, the film fixation system according to the present invention comprises at least one conveyor band (3) suitable to place at least one cylinder (1) thereon to move the cylinder (1) along a line; at least one aligning device (4) to align a heat-shrinking film (2) preferably with a circular structure worn around the periphery of the cylinder (1) on the conveyor band with respect to the cylinder (1); and at least one heating unit (5) suitable for heat-shrinking the film (2) aligned with respect to the cylinder (1) by means of the aligning device (4) to provide the fixation of the film (2) on the cylinder (1). Said conveyor band (3) can either have a band structure made of a composite material to place the cylinders (1) thereon, or a chain structure having at least one holding member to which a lower part of the cylinder (1) is placed (not illustrated in the figures).

In the film fixation system according to the present invention, the film (2) is worn on a cylinder (1) on the conveyor band (3) preferably from the top of the cylinder (1) in a manner surrounding the periphery of the cylinder (1). Then, the cylinder (1) advanced on the conveyor band (3) is brought to the aligning device (4). The position of the film (2) with respect to the cylinder (1) is adjusted in the aligning device (4). The step of wearing the film (2) on the cylinder (1) and/or of aligning the film (2) can either be made manually, or by means of an autonomous system. Following this step, the cylinder (1) is moved again on the conveyor band (3) and is brought to the heating unit (5). The film (2) is heated in the heating unit (5). The heated film (2) shrinks down and thus becomes tightly fixed on the cylinder (1) on which it was previously worn from the periphery. Then the cylinder (1) is preferably advanced again on the conveyor band (3) and transferred to another unit (e.g. storage or transport unit).

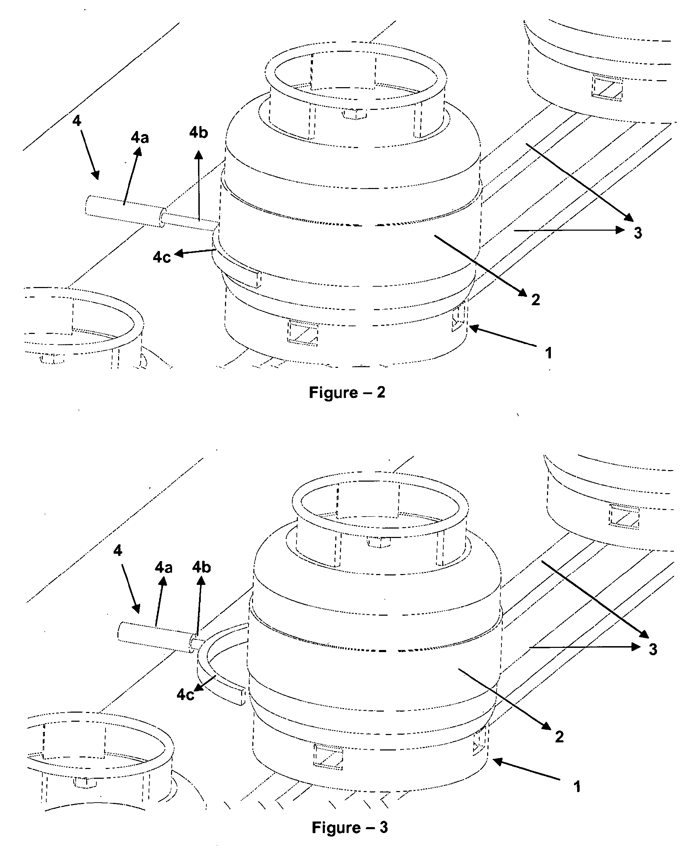

In a preferred embodiment according to the present invention, the aligning device (4) which is shown in figures 2 and 3 in a detailed manner preferably comprises at least one body (4a) with a fixed structure (e.g. mounted to a fixed surface) and at least one moving member (4b) provided with at least one holder member (4c) which is capable of moving relative to said body (4a) to approach to and move away from a cylinder (1) standing on the conveyor band (3) and makes contact with the cylinder (1), and is shaped in conformance (e.g. in a curved fashion) to the part of the cylinder (1) to which it contacts. in this embodiment, when the cylinder (1) on the conveyor band (3) comes in alignment with the aligning device (4), said moving member (4b) moves relative to the body (4a) and approaches the cylinder (1). This approaching motion can either be triggered manually using a switch (not illustrated in the figures), or triggered with the detection of the presence of a cylinder (1) by means of at least one sensor (not illustrated in the figures) provided on the aligning device (4). As illustrated in Figure 2, when the holder member (4c) comes to a position to contact the cylinder (1), the film (2) worn on the cylinder (1) is moved on the cylinder (1) until a lower portion thereof makes contact with the holder member (4c). Thus, any films (2) worn on the cylinders (1) are aligned among themselves. After the film (2) is aligned on the cylinder (1), said moving member (4b) is moved away from the cylinder (1) as illustrated in Figure 3. Thereafter the cylinder (1) is kept moving on the conveyor band (3). In this embodiment, the aligning device (4) preferably has a piston structure, wherein the movement of the moving member (4b) relative to the body (4a) is ensured by means of a pneumatic system.

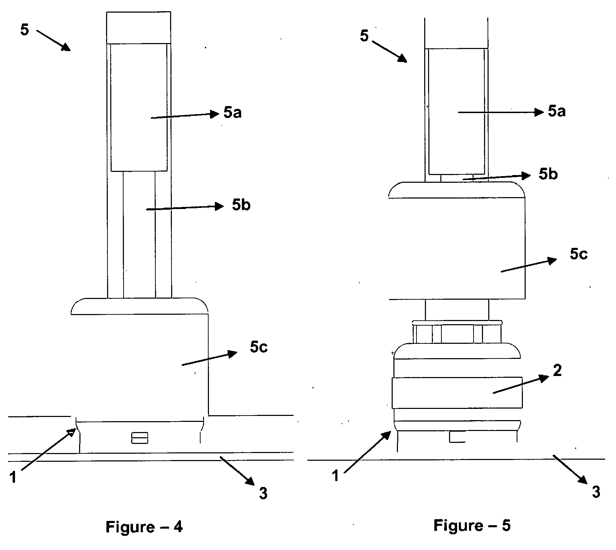

According to the present invention, the heating unit (5) which is shown in figures 4 and 5 in a detailed manner comprises at least one body (5a) with a fixed structure (e.g. mounted to a fixed surface) and at least one moving member (5b) provided with at least one heating cap (5c) which is capable of moving relative to said body (5a) to approach to and move away from a cylinder (1) standing on the conveyor band (3) and to heat a film (2) provided on the cylinder (1). Preferably, said heating cap (5c) has a structure (preferably a hollow cylindrical structure) which completely surrounds the periphery of the film (2) provided on the cylinder (1) when the moving member (5b) is moved to approach to the cylinder (1). Thus, the heater cap (5c) heats up the complete film (2) in a uniform manner and shrinks it (2) in smoothly without wrinkling the film. In this embodiment, when the cylinder (1) on the conveyor band (3) comes in alignment with the heating unit (5), said moving member (5b) is moved so that the heating cap (5c) surrounds the film (2) (and therefore the cylinder (1)) as illustrated in Figure 4. This movement can either be triggered manually using a switch (not illustrated in the figures), or triggered with the detection of the presence of a cylinder (1) by means of at least one sensor (not illustrated in the figures) provided on the heating unit (5). Once the heating cap (5c) surrounds the film (2), it applies heat to the film (2) so that the film (2) shrinks down. Then, as illustrated in Figure 5, the moving member (5b) is moved so that the heating cap (5c) is moved away from the cylinder (1) and the cylinder (1) is kept moving on the conveyor band (3).

According to the present invention, said heating cap (5c) is configured to blow hot vapor (preferably 120-130°C, 2 bars) so that a film (2) disposed on the cylinder (1) is heated up. By virtue of carrying out the heating process using hot vapor instead of using conventional heaters (e.g. resistor or gas heaters) in this embodiment, both the film (2) is prevented from overheating and burning/melting, and the cylinder (1) is prevented from burning/exploding by avoiding the use of high temperatures based on the fact that the cylinder (1) contains inflammable gas. Thus, the method can be operated safely.

The film fixation process is conducted in a rapid manner in the film fixation system developed according to the present invention by virtue of moving the cylinders (1) on the conveyor band (3). Additionally, the fixation process is performed in a reliable and practical manner using the aligner device (4) and the heating unit (5).

## Claims

1. A film fixation system for fixing at least one heat-shrinking film (2) onto a cylinder (1), comprising
- at least one conveyor band (3) suitable to place said cylinder (1) thereon to move the cylinder (1) along a line;
- at least one aligning device (4) to align a film (2) worn around the periphery of the cylinder (1) standing on the conveyor band (3) with respect to the cylinder (1); and
- at least one heating unit (5) suitable for heat-shrinking the film (2) aligned with respect to the cylinder (1) by means of the aligning device (4) to provide the fixation of the film (2) on the cylinder (1)
**characterized in that**, said heating device (5) comprises at least one body (5a). which has a fixed structure, and at least one moving member (5b) provided with at least one heating cap (5c) which is capable of moving relative to said body (5a) to approach to and move away from a cylinder (1) standing on the conveyor band (3), wherein said heating cap has a hollow cylindrical structure so as to surround the periphery of a film (2) provided on said cylinder (1) when the moving member (5b) is moved to approach to the cylinder'(1), and to heat up said film (2) provided on the cylinder (1) by blowing hot vapor thereto.

2. The film fixation system according to Claim 1, **characterized in that** said conveyor band (3) is configured in the form of a band made of a composite material on which a cylinder (1) is placed.

3. The film fixation system according to Claim 1, **characterized in that** said conveyor band (3) is configured in the form of a chain comprising at least one holding member to which a lower part of the cylinder (1) is fitted.

4. The film fixation system according to Claim 1, **characterized in that** said aligning device (4) comprises at least one body (4a) and at least one moving member (4b) provided with at least one holder member (4c) which Is capable of moving relative to said body (4a) to approach to and move away from a cylinder (1) standing on the conveyor band (3) for making contact with the cylinder (1), and is shaped in conformance to the part of the cylinder (1) to which it contacts.

5. The film fixation system according to Claim 4, **characterized in that** said body (4a) has a fixed structure.

6. The film fixation system according to Claim 4, **characterized in that** said holder member (4c) has a curved structure.

7. The film fixation system according to Claim 4, **characterized by** comprising least one switch for controlling the movement of said moving member (4b) relative to the body (4a).

8. The film fixation system according to Claim 4, **characterized by** comprising at least one sensor capable of detecting the presence of at least one cylinder (1) placed on the conveyor band (3) for controlling the movement of said moving member (4b) relative to the body (4a).

9. The film fixation system according to Claim 4, **characterized in that** the aligning member (4) has a piston structure.

10. The film fixation system according to Claim 1. **characterized in that** said heating cap (5c) has a structure which completely surrounds the periphery of a film (2) provided on a cylinder (1) when the moving member (5b) is moved to approach to the cylinder (1).

## Patentansprüche

1. **Folienfixierungssystem** zum Fixieren von zumindest einer Wärmeschrumpffolie (2) auf einen Zylinder (1), mit
- zumindest einem Förderband (3), das geeignet ist, den Zylinder (1) darauf zu platzieren, um den Zylinder (1) entlang einer Linie zu bewegen;
- zumindest einer Ausrichtungsvorrichtung (4), um eine Folie (2), die am Umfang des Zylinders (1) angeordnet ist, gegenüber dem Zylinder (1), der auf dem Förderband (3) steht, auszurichten; und
- zumindest einer Heizeinheit (5), die geeignet ist die Folie (2) durch Wärme zu schrumpfen, um die Folie (2) auf dem Zylinder (1) zu fixieren, wobei die Folie (2) gegenüber dem Zylinder (1) durch die Ausrichtungsvorrichtung (4) ausgerichtet ist,
**dadurch gekennzeichnet, dass** die Heizeinheit (5) zumindest einen Körper (5a), der eine feste Struktur aufweist, und zumindest ein Bewegungselement (5b) mit zumindest einer Heizkappe (5c) umfasst, wobei die Heizkappe (5c) relativ zu dem Körper (5a) bewegbar ist, um sich auf den Zylinder (1) zu und von dem Zylinder (1) weg zu bewegen, der auf dem Förderband (3) steht, wobei die Heizkappe (5c) eine Hohlstruktur aufweist, um den Umfang einer Folie (2) auf dem Zylinder (1) zu umgeben, wenn das Bewegungselement (5b) auf den Zylinder (1) zu bewegt wird, und um die Folie (2) auf dem Zylinder (1) zu erwärmen, indem heißer Dampf dagegen geblasen wird.

2. Folienfixierungssystem nach Anspruch 1, **dadurch gekennzeichnet, dass** das Förderband (3) in Form eines Bandes, bestehend aus einem Verbundmaterial, auf dem ein Zylinder (1) platziert ist, ausgestaltet ist.

3. Folienfixierungssystem nach Anspruch 1, **dadurch gekennzeichnet, dass** das Förderband (3) in Form einer Kette mit zumindest einem Halteelement, das zu einem unteren Abschnitt des Zylinders (1) passt, ausgestaltet ist.

4. Folienfixierungssystem nach Anspruch 1, **dadurch gekennzeichnet, dass** die Ausrichtungsvorrichtung (4) zumindest einen Körper (4a) und zumindest ein Bewegungselement (4b) mit zumindest einem Halteelement (4c) umfasst, wobei das Halteelement (4c) relativ zu dem Körper (4a) bewegbar ist, um sich auf den Zylinder (1) zu und von dem Zylinder (1) weg zu bewegen, der auf dem Förderband (3) steht, um den Zylinder (1) zu kontaktieren, und in Übereinstimmung mit dem Abschnitt des Zylinders (1), den es kontaktiert, geformt ist.

5. Folienfixierungssystem nach Anspruch 4, **dadurch gekennzeichnet, dass** der Körper (4a) eine feste Struktur aufweist.

6. Folienfixierungssystem nach Anspruch 4, **dadurch gekennzeichnet, dass** das Halteelement (4c) eine gekrümmte Struktur aufweist.

7. Folienfixierungssystem nach Anspruch 4, **dadurch gekennzeichnet, dass** es zumindest einen Schalter zum Steuern der Bewegung des Bewegungselements (4b) relativ zu dem Körper (4a) umfasst.

8. Folienfixierungssystem nach Anspruch 4, **dadurch gekennzeichnet, dass** es zumindest einen Sensor umfasst, durch den die Anwesenheit von zumindest einem Zylinder (1) auf dem Förderband (3) detektierbar ist, um die Bewegung des Bewegungselements (4b) relativ zu dem Körper (4a) zu regeln.

9. Folienfixierungssystem nach Anspruch 4, **dadurch gekennzeichnet, dass** das Ausrichtungselement (4) eine Kolbenstruktur aufweist.

10. Folienfixierungssystem nach Anspruch 1, **dadurch gekennzeichnet, dass** die Heizkappe (5c) eine Struktur aufweist, die vollständig den Umfang einer Folie (2) auf einem Zylinder (1) umschließt, wenn das Bewegungselement (5b) auf den Zylinder (1) zu bewegt wird.

## Revendications

1. Système de fixation de film pour fixer au moins un film thermorétractable (2) sur un cylindre (1), comprenant
- au moins une bande de convoyeur (3) appropriée pour placer ledit cylindre (1) sur celle-ci afin de déplacer le cylindre (1) le long d'une ligne ;
- au moins un dispositif d'alignement (4) pour aligner un film (2) enroulé autour de la périphérie du cylindre (1) debout sur la bande de convoyeur (3) par rapport au cylindre (1) ; et
- au moins une unité de chauffage (5) appropriée pour thermorétracter le film (2) aligné par rapport au cylindre (1) au moyen du dispositif d'alignement (4) pour assurer la fixation du film (2) sur le cylindre (1),
**caractérisé en ce que** ledit dispositif de chauffage (5) comprend au moins un corps (5a) qui a une structure fixée, et au moins un élément mobile (5b) doté d'au moins une coiffe de chauffage (5c) qui est capable de se déplacer par rapport audit corps (5a) pour s'approcher de et se déplacer en éloignement d'un cylindre (1) debout sur la bande de convoyeur (3), dans lequel ladite coiffe de chauffage a une structure cylindrique creuse de manière à entourer la périphérie d'un film (2) prévu sur ledit cylindre (1) quand l'élément mobile (5b) est déplacé pour s'approcher du cylindre (1), et à chauffer ledit film (2) prévu sur le cylindre (1) en soufflant de la vapeur chaude sur celui-ci.

2. Système de fixation de film selon la revendication 1, **caractérisé en ce que** ladite bande de convoyeur (3) est configurée sous la forme d'une bande réalisée en un matériau compatible sur lequel est placé un cylindre (1).

3. Système de fixation de film selon la revendication 1, **caractérisé en ce que** ladite bande de convoyeur (3) est configurée sous la forme d'une chaîne comprenant au moins un élément de maintien sur lequel est montée une partie inférieure du cylindre (1).

4. Système de fixation de film selon la revendication 1, **caractérisé en ce que** ledit dispositif d'alignement (4) comprend au moins un corps (4a) et au moins un élément mobile (4b) doté d'au moins un élément de maintien (4c), qui est capable de se déplacer par rapport audit corps (4a) pour s'approcher de et se déplacer en éloignement d'un cylindre (1) debout sur la bande de convoyeur (3) pour établir un contact avec le cylindre (1) et est formé en conformité avec la partie du cylindre (1) sur laquelle il vient en contact.

5. Système de fixation de film selon la revendication 4, **caractérisé en ce que** ledit corps (4a) a une structure fixée.

6. Système de fixation de film selon la revendication 4, **caractérisé en ce que** ledit élément de maintien (4c) a une structure incurvée.

7. Système de fixation de film selon la revendication 4, **caractérisé en ce qu'**il comprend au moins un commutateur pour commander le mouvement dudit élément mobile (4b) par rapport au corps (4a).

8. Système de fixation de film selon la revendication 4, **caractérisé en ce qu'**il comprend au moins un capteur capable de détecter la présence d'au moins un cylindre (1) placé sur la bande de convoyeur (3) pour commander le mouvement dudit élément mobile (4b) par rapport au corps (4a).

9. Système de fixation de film selon la revendication 4, **caractérisé en ce que** l'élément d'alignement (4) a une structure en piston.

10. Système de fixation de film selon la revendication 1, **caractérisé en ce que** ladite coiffe de chauffage (5c) a une structure qui entoure complètement la périphérie d'un film (2) prévu sur un cylindre (1) quand l'élément mobile (5b) est déplacé pour s'approcher du cylindre (1).
